# EUROPÄISCHE PATENTSCHRIFT

(11) **EP 1 249 003 B1**
(45) Veröffentlichungstag und Bekanntmachung des Hinweises auf die Patenterteilung: **07.04.2004**
(21) Anmeldenummer: 00991799.8
(22) Anmeldetag: 22.12.2000
(51) Int. Cl.: G06K 19/073, G07F 7/10

(54) **INTEGRIERTE SICHERHEITSSCHALTUNG**
INTEGRATED PROTECTION CIRCUIT
CIRCUIT DE PROTECTION INTEGRE

(30) Priorität: 19.01.2000 EP 00100995
(43) Veröffentlichungstag der Anmeldung: 16.10.2002
(73) Patentinhaber: Infineon Technologies AG, 81669 München (DE)
(72) Erfinder: HORVAT, Helmut, A-8042 Graz (AT); WALLSTAB, Stefan, 81739 München (DE)
(74) Vertreter: Epping Hermann & Fischer
(86) Internationale Anmeldenummer: PCT/EP2000/013136
(87) Internationale Veröffentlichungsnummer: WO 2001/054057

(56) Entgegenhaltungen:
- WO-A-88/10479
- WO-A-99/56253
- FR-A- 2 311 360
- FR-A- 2 493 564
- US-A- 5 594 227

## Beschreibung

Die Erfindung betrifft eine integrierte Sicherheitsschaltung mit einer Funktionseinheit zur Ausführung einer Sicherheitsfunktion.

Integrierte Sicherheitsschaltungen werden beispielsweise in Chipkarten verwendet. Die Schaltung ist monolithisch in einem Microcontroller integriert und berechnet beispielsweise 'die Ver- und Entschlüsselung des Datenverkehrs zwischen dem Microcontroller und einem Lesegerät. Die sicherheitssensitiven Funktionen des Microcontrollers der Chipkarte sind unberechtigten, betrügerischen Angriffen mit dem Ziel, die Daten zu entschlüsseln, ausgesetzt. Eine bekannte Angriffsmethode besteht darin, interessierende sicherheitssensitive Funktionen immer wieder mit nach geeigneten Kriterien sortierten Daten auf den Microcontroller anzuwenden. Auf die dadurch erhaltenen Meßwerte werden spezielle statistische Verfahren und Korrelationsmaßnahmen angewandt, um Informationen zu erhalten, die ermöglichen, den Datenverkehr von und zur Chipkarte zu entschlüsseln. Zur Ermittlung eines kryptographischen Schlüssels kann es erforderlich sein, die Chipkarte etwa 10.000 mal zu aktivieren und jedesmal festzustellen, ob der Microcontroller den Zugriff als berechtigt akzeptiert oder unberechtigt ablehnt. Bekannte Microcontroller lassen in der Praxis solche Angriffsversuche in beliebiger Vielzahl zu. Nach einer Versuchszeit von mehreren Stunden oder Tagen könnte dann der kryptographische Schlüssel rekonstruiert werden.

Bisherige Methoden, um statistische Angriffe abzuwehren, zielen beispielsweise darauf ab, die Meßwerte durch Überlagerung von Störsignalen oder zeitlicher Verschiebung des Nutzsignals so zu verfälschen, daß statistische Analysen erschwert werden. Bei wirksamer Auslegung verlangsamt sich die Verarbeitungsgeschwindigkeit in der Nutzanwendung. Bei geringerem Aufwand an Signalverfälschung könnte der Schutz aber nicht ausreichen.

Eine andere bekannte Möglichkeit besteht darin, den verwendeten Schlüssel nach einer bestimmten Anzahl von Benutzungen zu aktualisieren, beispielsweise durch Fortschreiben des Schlüssels mittels einer Einwegfunktion, beispielsweise einer Hash-Funktion oder mittels des N-Count-Verfahrens. Ein Nachteil dieser Maßnahmen besteht darin, daß nicht nur der Microcontroller der Chipkarte entsprechend ausgebildet sein muß, sondern das gesamte Sicherheitssystem einschließlich aller bisher bereits ausgegebenen Chipkarten und der Lesegeräte.

Eine weitere Möglichkeit, Angriffe abzuwehren ist der WO 99/56253 zu entnehmen, gegen die die Ansprüche abgegrenzt wurden. Darin ist beschrieben, die Anzahl von Authentifizierungsversuchen pro definierter Zeiteinheit zu zählen. Bei Überschreiten eines Schwellwertes wird von einem Mißbrauchsversuch ausgegangen und weiterere Versuche unterbunden. In FR-A-2 493 564 wird eine Schaltung beschrieben, die bei einer Fehleingabe eine weitere Eingabe während eines definierten Zeitraums verhindert.

Andere Dokumente WO 88/10479 und US-A-5 594 227 enthalten weitere Maßnahmen zur Absicherung einer Chipkarte.

Die Aufgabe der Erfindung besteht nun darin, eine integrierte Sicherheitsschaltung anzugeben, die ebenso eine höhere Sicherheit gegenüber unberechtigten Angriffen hat.

Gemäß der Erfindung wird diese Aufgabe durch eine integrierte Sicherheitsschaltung gelöst, die in den Ansprüchen definiert ist.

Bei der Sicherheitsschaltung gemäß der Erfindung wird die Anzahl der Benutzungen pro Zeiteinheit als Kriterium für ein Blockieren der Sicherheitsfunktion verwendet. Bei entsprechender Auslegung der Parameter kann dadurch erreicht werden, daß die Zeit zur Ermittlung hinreichend vieler Meßdaten für einen Angreifer unattraktiv lang wird. Die Rechenleistung des Microcontrollers wird durch die zusätzlichen Maßnahmen nicht nennenswert weiter belastet. Die erforderliche Verarbeitungsgeschwindigkeit wird daher nicht erhöht. Zwar sind zusätzliche Schaltungsmaßnahmen erforderlich, der Schaltungsaufwand ist jedoch gering. Die Schnittstelle zum Gesamtsystem verändert sich nicht, so daß die Sicherheitsschaltung gemäß der Erfindung kompatibel mit entsprechenden bisherigen Schaltungen ist.

In Ausgestaltung der die Anzahl der Ausführungen der Sicherheitsfunktion pro Zeit ermittelnden Steuerungseinrichtung sind zwei Zähleinrichtungen vorgesehen. Einer der Zähler, der Benutzungszähler, wird bei jedem Aufruf der Sicherheitsfunktion inkrementiert (Aufwärtszähler) oder alternativ dekrementiert (Abwärtszähler). Eine Zeitmeßeinrichtung mißt die verstreichende absolute Zeit. Beim Initialisieren der Schaltung wird die Zeitmeßeinrichtung aufgeladen und die Zähleinrichtung auf einen vorbestimmten Wert gesetzt. Wenn die Zähleinrichtung einen Schwellwert erreicht, ohne daß die Zeitmeßeinrichtung abgelaufen ist, wird die Ausführung der Sicherheitsfunktion blockiert. Insgesamt ergibt sich, daß die Anzahl der Ausführungen der Sicherheitsfunktion pro Zeit gemessen wird und beim Überschreiten einer vorgegebenen Anzahl die Ausführung der Sicherheitsfunktion blockiert wird.

Zweckmäßigerweise wird die Zeitmeßeinrichtung so ausgeführt, daß sie auch bei abgeschalteter Versorgungsspannung arbeitet. Wenn die Zeitmeßeinrichtung abgelaufen ist, entweder unter Versorgungsspannung stehend oder ohne Versorgungsspannung, wird ein Ablaufsignal ausgegeben, so daß die Zeitmeßeinrichtung sowie die Benutzungszähleinrichtung wieder aufgeladen werden können. Nach einem Rücksetzen der Benutzungszähleinrichtung wird die Sperre für die Sicherheitsfunktion aufgehoben. Alternativ ist es auch möglich, daß beim Überschreiten des Schwellwerts durch den Benutzungszähler die Sicherheitsschaltung permanent gesperrt und dadurch unbrauchbar gemacht wird.

Dadurch daß die Zeitmeßeinrichtung auch während abgeschalteter Versorgungsspannung läuft, ist es nicht möglich, daß durch schnelles Ab- und Anschalten der Versorgungsspannung ein schnellerer Ablauf der Uhr und dadurch eine höhere Anzahl von Meßwerten bei einem Angriff erreicht wird. Die Zeitmeßeinrichtung kann analog oder digital ausgeführt werden. Eine analoge Zeitmeßeinrichtung verwendet einen Ladungsspeicher, welcher nach dem Aufladen entladen wird, wobei der Entladevorgang auch nach Abschalten der Versorgungsspannung weiter läuft. Eine digitale Zeitmeßeinrichtung kann als Vorwärts- oder Rückwärtszähler realisiert sein, wobei ein Energiespeicher, beispielsweise eine Batterie, die Stromversorgung speziell für den Zähler weiter aufrecht erhält. Die übrigen Schaltungen des Microcontrollers werden nicht versorgt.

Die analoge Ausführungsvariante der Zeitmeßeinrichtung umfaßt einen Kondensator, der bei der Initialisierung aufgeladen wird und anschließend nur noch über Leckstromverluste entladen wird. Zur Realisierung des Kondensators ist es zweckmäßig, einen der Pole des Kondensators - mit Ausnahme der Anschlußfläche - von Dielektrikum zu umgeben. Das Dielektrikum kann Siliziumdioxid oder Siliziumnitrid sein. Dieser Pol ist dann ausreichend gut isoliert, so daß von der Plattenfläche selbst kaum Leckströme abfließen. Der Kondensator wird von einem Schalttransistor in MOS-Halbleitertechnologie angesteuert. Bei leitendem Schalttransistor wird der Kondensator aufgeladen; bei abgeschaltetem Schaltransistor entlädt sich der Kondensator nur über Leckströme, die über dasjenige Elektrodengebiet abfließen, welches mit dem betreffenden Kondensatorpol verbunden ist. Durch Steuerung des Substratanschlusses des Schalttransistors kann dessen Verhalten im leitenden und gesperrten Zustand weiterhin verbessert werden. Die am Kondensator anliegende Spannung wird über einen Komperator abgefragt, um den entladenen Zustand festzustellen und das Ablaufsignal zu aktivieren.

Die Entladekennlinie des Kondensators ist temperaturabhängig. Bei erhöhter Temperatur wird der Kondensator stärker entladen als bei niedriger Temperatur. Jedoch kann die Sicherheitsfunktion nur bei üblichen Betriebstemperaturen ausgeführt werden, um dementsprechende Meßwerte für einen statistischen Angriff zu erhalten. Die für das Erwärmen und Abkühlen erforderliche Zeitdauer verhindert, daß ausreichend viele Meßwerte in vernünftiger Zeit erzeugt werden. Eine Zeitbasis, die auf der Entladung von sog. Traps an Nitrit-Schichten über Fowler-Nordheim-Tunneling basieren, ist temperaturunabhängig und als Speichermedium alternativ zu einem Kondensator geeignet.

Für die Benutzungszähleinrichtung gibt es verschiedene Realisierüngsmöglichkeiten. Der Benutzungszähler kann als reiner Softwarezähler ausgeführt werden, bei dem der Zählwert nur durch die zentrale Verarbeitungseinheit (CPU) des Microcontrollers inkrementiert bzw. dekrementiert und ausgewertet wird. Nach jeder Aktualisierung wird der Zählwert zweckmäßigerweise in den auf dem Microcontrollerchip ohnehin enthaltenen nichtflüchtigen Speicher (NVM) zurückgeschrieben, so daß er auch nach einem Spannungsausfall erhalten bleibt. Es sind auch Mischformen aus Hardware- und Softwarezähler möglich, insbesondere wenn die Benutzung eines Coprozessors überwacht werden soll. Die CPU liest den aktuellen Wert des Benutzungszählers aus dem NVM aus und schreibt ihn als Startwert in einen Hardwarezähler. Außerdem wird der Schwellwert in den Hardwarezähler geladen, bei dessen Erreichen das Blockierungssignal erzeugt wird. Der Endwert kann aber auch in einem ROM-Speicher stehen. Wird der Schwellwert erreicht, bleibt der Hardwarezähler stehen und sperrt den Coprozessor. Der Schwellwert kann außerdem vorsorglich ins NVM geschrieben werden, um die Information auch beim Trennen der Versorgungsspannung zu erhalten. Nach Abschluß der Operation des Coprozessors wird der tatsächliche Zählerstand in das NVM geschrieben. Alternativ könnte der Hardwarezähler auch direkt auf das NVM zugreifen.

Die Benutzungszähleinrichtung kann auch als Analogschaltung ausgeführt werden. Der Zählerstand wird dann durch die Menge der Ladung in einem Ladungsspeicher repräsentiert. Dadurch wird Unabhängigkeit von einem Betriebstakt erreicht. Wenn sowohl der Betriebszähler als auch die Uhr als Analogschaltungen ausgeführt sind, besteht die die Anzahl der Benutzungen pro Zeiteinheit repräsentierende Information im Verhältnis der Spannungsverhältnisse der beiden Ladungsspeicher. Die Ladungsspeicher von Uhr und Benutzungszähler werden zunächst auf unterschiedliche Spannungen vorgeladen. Bei jedem Aufruf der Sicherheitsfunktion wird ein kurzzeitiger, unvollständiger Ladungsausgleich ausgeführt. Bei Erreichen eines bestimmten Spannungsverhältnisses, beispielsweise beide Spannungen sind gleich, wird festgestellt, daß die höchst zulässige Anzahl von Benutzungen der Sicherheitsfunktion pro Zeit erreicht ist. Ein weiterer Aufruf der Sicherheitsfunktion wird dann blockiert.

Nachfolgend wird die Erfindung anhand der in der Zeichnung dargestellten Figuren näher erläutert. Es zeigen
- Figur 1: ein Prinzipschaltbild einer integrierten Sicherheitsschaltung gemäß der Erfindung,
- Figur 2: ein Blockschaltbild mit erfindungsrelevanten Elementen eines Microcontrollers und
- Figur 3: eine analog arbeitende schaltungstechnische Realisierung einer Zeicmeßeinrichtung, die für die Sicherheitsschaltung der Erfindung geeignet ist.

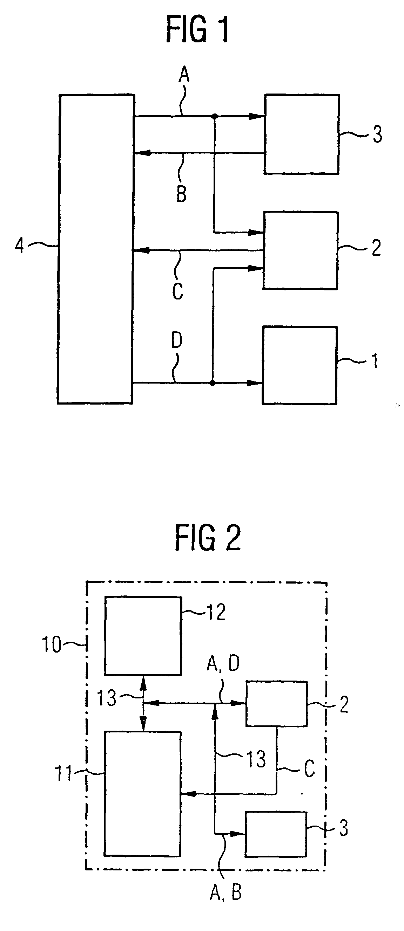

Die Schaltung in Figur 1 zeigt eine Zeitmeßeinrichtung oder Uhr 3, einen Benutzungszähler 2 sowie eine Funktionseinrichtung 1, die eine Sicherheitsfunktion ausführt. Eine Steuerungseinrichtung 4 dient zur Ablaufsteuerung. Die Schaltung ist in einem Microcontroller enthalten, der auf einer Chipkarte angeordnet ist. Die Funktionseinheit 1 führt eine Verund Entschlüsselung des Datenverkehrs zwischen Chipkarte und Lesegerät aus.

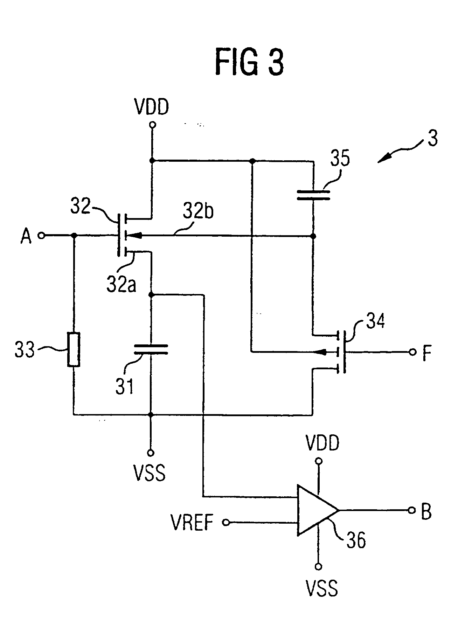

Um statistische Angriffe zur etwaigen Ermittlung der Funktionscharakteristik oder gar des Schlüssels der Einrichtung 1 zu verhindern, ist vorgesehen, die Anzahl der Benutzungen der Funktionseinheit 1 pro Zeiteinheit zu begrenzen. Hierzu wird die Uhr 3 durch ein Steuersignal A aus der Steuerungseinrichtung 4 aufgeladen, um von nun an abzulaufen. Ein Ablaufsignal B, welches von der Uhr 3 an die Steuerungseinrichtung 4 zurückgegeben wird, zeigt an, daß die von der Uhr 3 gemessene absolute Zeit verstrichen ist. Die Uhr 3 kann als Digitalzähler oder Analogzähleinrichtung ausgeführt sein. Ein analoges Ausführungsbeispiel ist in Figur 3 gezeigt.

Der Benutzungszähler 2 ist ein Digitalzähler, welcher ebenfalls mit dem Aufladen der Uhr 3 initialisiert, d.h. auf einen vorbestimmten Wert gesetzt wird. Mit jedem Aufruf der Funktionseinheit 1 durch das Signal D wird der Benutzungszähler 2 inkrementiert. Wenn der Zähler 2 einen vorbestimmten Maximalwert erreicht, wird das Signal C aktiviert. Die Steuerungseinrichtung 4 schließt bei noch nicht abgelaufener Uhr 3 und Erreichen des Maximalwerts des Zählers 2 daraus, daß eine vorbestimmte Anzahl von Aufrufen der Sicherheitsfunktion in der Einheit 1 pro durch die Uhr 3 festgelegter Zeitdauer erreicht worden ist. Die Steuereinheit 4 blockiert daraufhin jeden weiteren Aufruf der Sicherheitsfunktion in der Funktionseinheit 1. Im beschriebenen Beispiel ist der Benutzungszähler 2 ein Aufwärtszähler. Er kann alternativ als Abwärtszähler ausgeführt werden, der bei Initialisierung auf einen Startwert gesetzt wird und dann bis zu einem Endwert, beispielsweise den Zählerstand Null, dekrementiert wird.

Die Uhr 3 ist derart ausgeführt, daß sie auch bei abgeschalteter Versorgungsspannung weiterläuft und die verstreichende Zeit absolut mißt. Auch der Benutzungszähler 2 speichert den momentanen Benutzungszählwert nach Abschalten der Versorgungsspannung. Hierzu wird der momentane Zählerstand des Zählers 2 in einem nichtflüchtigen Speicher, der ohnehin auf dem Microcontroller vorhanden ist, zwischengespeichert. Alternativ ist eine Batteriepufferung möglich.

Die Bewertung, ob die Uhr abgelaufen ist, kann einstellbar ausgeführt werden, um sowohl hinsichtlich des Parameters Benutzung als auch hinsichtlich des Parameters Zeitdauer Flexibilität zu erhalten. Für manche Zwecke kann die Gewährung von fünf Benutzungen pro fünf Minuten ausreichend sein, für andere Zwecke die Messung über einen größeren Zeitraum sinnvoll sein, z.B. 60 Benutzungen pro Stunde. Diese 60 Benutzungen können dann aber durchaus in den ersten fünf Minuten der Stunde stattfinden.

Der Microcontroller 10 in Figur 2 weist eine zentrale Verarbeitungseinheit CPU 11 auf. Diese steuert die Betriebsabläufe und führt Berechnungen aus. In einem nichtflüchtigen Speicher NVM 12 können Daten auch nach Abschalten der Versorgungsspannung dauerhaft gespeichert werden. CPU 11 und NVM 12 kommunizieren über einen chipinternen Bus 13. Die Uhr 3 ist als separater Schaltungsblock vorgesehen. Die die Uhr 3 steuernden Signale A, B werden über den Bus 13 bereitgestellt. Der Benutzungszähler 2 ist als weiterer separater Schaltungsblock auf dem Chip des Microcontrollers 10 angeordnet. Er wird mit den Signalen A und D über den Bus 13 versorgt. Die Funktionseinheit 1 wird von der CPU 11 und entsprechender Softwaresteuerung realisiert. Wenn der Zähler 2 den vorgegebenen Endwert erreicht, wird dieser Zustand der CPU 11 als Steuerungssignal C angezeigt. Der Benutzungszähler 2 erhält den Startund den Endwert aus dem NVM 12. Nach jedem Aktualisieren des Zählerstands des Zählers 2 wird dieser in das NVM 12 zurückgeschrieben, um ihn auch bei einem Wiedereinschalten der Versorgungsspannung nach einem Abbruch der Versorgungsspannung zur Verfügung zustellen, wenn die Uhr 3 noch nicht abgelaufen ist.

Die Uhr 3 wird zweckmäßigerweise als Analogzähler ausgeführt. Ein Ausführungsbeispiel ist in Figur 3 dargestellt. Die Uhr umfaßt einen Ladungsspeicher 31, dessen Ladungszustand die abgelaufene Zeit repräsentiert. Der Ladungsspeicher 31 ist ein Kondensator. Ein Schalttransistor 32 bildet mit dem Kondensator 31 eine Reihenschaltung, die zwischen Versorgungsspannungsanschlüsse für die Versorgungspotentiale VDD und VSS geschaltet sind. Der Schalttransistor 32 ist in MOS-Schaltungstechnik als N-Kanal-Transistor ausgeführt und dient zum Laden und Entladen des Kondensators 31. Zum Aufladen der Uhr, d.h. zum Laden des Kondensators 31 wird das Signal A am Gateanschluß des Schalttransistors 32 aktiviert, so daß der N-Kanal-MOS-Transistor 32 leitend wird. Der Kondensator 31 wird aus dem Versorgungspotential VDD aufgeladen. Ein zwischen Gateanschluß des Transistors 32 und Anschluß für Masse VSS geschalteter Widerstand 33 dient zum sicheren Abschalten des Transistors 32, wenn das Signal A deaktiviert ist.

Um Leckstromverluste am Kondensator 31 möglichst gering zu halten, wird einer seiner Pole, beispielsweise der mit dem Transistor 32 verbundene Pol, vollständig von Siliziumoxid oder Nitrid umgeben, abgesehen von der Verbindungsleitung zwischen Kondensatorplatte und Transistor 32. Siliziumoxid und Nitrid bilden außerdem das Dielektrikum des Kondensators 31. Realisiert werden kann dies dadurch, daß eine Metalll-Schicht mit dem Gate-Polisilizium zu einem Pol zusammengefaßt wird. Der erste Pol ist mit dem Transistor 32 verbunden. Eine Metall2-Schicht, Substrat und Poly2-Schicht bilden den zweiten, an Masse VSS angeschlossenen Pol. Metalllund Meta112-Schichten sind dabei zwei übereinanderliegende Metallisierungen.

Bei abgeschaltetem Schalttransistor 32 ist die Ladung im Kondensator 31 gespeichert und entlädt sich nur über sich im Halbleiterkörper einstellende Leckstrompfade. Die Ladung bleibt auch nach Abschalten der Versorgungsspannung VDD, VSS im Kondensator 31 erhalten. Durch die Isolierung des mit dem Schalttransistor verbundenen Pols des Kondensators 31 sind Leckstromverluste von diesem Pol direkt ins Substrat nicht vorhanden. Die Entladung des Kondensators 31 kann daher nur über die Dotierungsstruktur des kondensatorseitigen Anschlusses 32a des Schalttransistors 32 erfolgen. Der N-Kanal-MOS-Transistor 32 ist in einer P-Wanne ausgeführt. Es stellen sich dort geringe Leckströme ein, die sich im Pfad zwischen dem den Anschluß 32a des Transistors 32 bildenden Dotierungsgebiet, der Wanne und dem Substrat ausbilden. Die Entladungsstrecke ist ausreichend hochohmig, um eine entsprechend lange Zeitdauer durch die Uhr messen zu können. Andererseits aber wird die Entladung in angemessener Zeit beendet. Die Entladungsrate liegt in der Größenordnung von 1 fA/µm² bei Raumtemperatur. Die Entladungsrate kann durch entsprechende geometrische Anpassung der Dotierungsstrukturen skaliert werden. Zweckmäßigerweise wird das Dotierungsgebiet des Anschlusses 32a von der Substratoberfläche aus rund ausgeführt, um eine minimale Kontaktfläche zur P-Wanne zu erhalten. Bei anliegender Versorgungsspannung VDD, VSS wirkt der Anschluss 32a als Source-Anschluß des Transistors 32; bei abgeschalteter Versorgungsspannung kehren sich die Spannungsverhältnisse um, so daß der Anschluß 32a als Gate-Elektrode wirkt. Die am Kondensator 31 anliegende Spannung wird von eieinem Komparator 36 abgefragt. Der Komparator 36 ist bei anliegender Versorgungsspannung VDD, VSS aktiv. Er vergleicht die am Kondensator 31 anliegende Spannung mit einer Referenzspannung VREF. Er erzeugt daraus das Abschaltsignal B, wenn die Kondensatorspannung 31 unter die Referenzspannung VREF abgesunken ist und damit anzeigt, daß die zu messende Zeitdauer abgelaufen ist.

Der Substratanschluß 32b des Schalttransistors 32 ist über einen P-Kanal-MOS-Transistor 34 mit Masse VSS verbindbar. Der P-Kanal-MOS-Transistor 34 wird durch ein Signal F so gesteuert, daß er nach dem Abschalten des Schalttransistors 32 leitend gesteuert wird, so daß der Substratanschluß 32b des Schalttransistors 32 auf Masse VSS gelegt wird. Dadurch wird bewirkt, daß etwaige Subthreshold-Ströme durch den Kanal des Transistors 32 weiter verringert werden. Wenn demgegenüber der Schalttransistor 32 leitend geschaltet ist, um den Kondensator 31 aufzuladen, wird der Transistor 34 gesperrt, so daß über eine Kapazität 35 der Substratanschluß 32b des Schalttransistors 32 an das positive Versorgungspotential VDD angehoben wird, um den leitenden Kanal des Schalttransistors 32 noch weiter aufzusteuern.

Alternativ zu dem in Figur 3 dargestellten geschalteten Substratanschluß 32b des Schalttransistors 32 kann das Gate des Transistors 32 über eine geschaltete Kapazität negativ vorgespannt werden, d.h. das Gate wird auf ein Potential unterhalb von Masse VSS gelegt. Der Transistor 32 wird dabei noch sicherer gesperrt, um Subtreshhold-Ströme durch seinen Kanal zu vermeiden.

## Patentansprüche

1. Integrierte Sicherheitsschaltung
mit einer Funktionseinheit (1), die ausgestaltet ist, eine Sicherheitsfunktion auszuführen,
mit einer Steuerungseinrichtung (2, 3, 4), die ausgestaltet ist, die Anzahl der Ausführungen der Sicherheitsfunktion durch die Funktionseinheit (1) pro Zeit zu ermitteln und in Abhängigkeit davon die weitere Ausführung der Sicherheitsfunktion durch die Funktionseinheit (1) freizugeben oder zu blockieren, wobei die Steuerungseinrichtung (2, 3, 4) eine Zähleinrichtung (2) aufweist, die mit der Funktionseinheit (1) gekoppelt ist, um nach einer Initialisierung jede Ausführung der Sicherheitsfunktion in der Funktionseinheit (1) zu zählen,
**gekennzeichnet durch**
einen Kondensator (31), in Abhängigkeit von dessen Ladezustand ein Ablaufsignal (B) erzeugbar ist, welches angibt, daß eine vorgegebene maximale Zeitdauer abgelaufen ist, und ein Schaltungsmittel (4, 32), um bei Vorliegen des Ablaufsignals (B) den Kondensator (31) wieder aufzuladen und die Zähleinrichtung (2) zu initialisieren.

2. Integrierte Sicherheitsschaltung nach Anspruch 1,
**gekennzeichnet durch**
ein Mittel zur Vorgabe eines Schwellwerts, wobei dann, wenn die Zähleinrichtung (2) den Schwellwert überschreitet, die Ausführung der Sicherheitsfunktion **durch** die Funktionseinheit (1) blockiert wird, und andernfalls freigegeben wird.

3. Integrierte Sicherheitsschaltung nach Anspruch 2,
**dadurch gekennzeichnet, daß**
Anschlüsse für eine Versorgungsspannung (VDD, VSS) vorgesehen sind, daß die Anschlüsse mit der Funktionseinheit (1) und der Steuerungseinrichtung (2, 3, 4) verbunden sind und die Funktionseinheit (1) ausgebildet ist, die Sicherheitsfunktion auszuführen, wenn die Versorgungsspannung (VDD, VSS) anliegt, und daß der Kondensator (31) ausgebildet ist, sowohl bei einem Anliegen der Versorgungsspannung (VDD, VSS) als auch anschließend bei einem Nichtanliegen der Versorgungsspannung (VDD, VSS) die verstreichende Zeit zu messen.

4. Integrierte Sicherheitsschaltung nach einem der Ansprüche 1 bis 3,
**dadurch gekennzeichnet, daß**
die Zähleinrichtung (2) ein digitaler Vorwärtszähler oder ein Rückwärtszähler ist, der bei jedem Aufruf der Sicherheitsfunktion inkrementiert bzw. dekrementiert wird, daß bei der Initialisierung der Zähler auf Null bzw. auf den vorgegebenen Schwellwert vorbesetzt wird und daß beim Überschreiten des Schwellwerts bzw. der Null ein Signal (C) erzeugt wird, um die weitere Ausführung der Sicherheitsfunktion durch die Funktionseinheit (1) freizugeben oder zu blockieren.

5. Integrierte Sicherheitsschaltung nach einem der Ansprüche 1 bis 4,
**dadurch gekennzeichnet, daß**
der Kondensator (31) nur über einen Leckstromverlust entladbar ist.

6. Integrierte Sicherheitsschaltung nach **Anspruch 5,**
**dadurch gekennzeichnet, daß**
der Kondensator (31) zwei Pole und ein dazwischen liegendes Dielektrikum aufweist und daß einer der Pole vom Dielektrikum umgeben ist.

7. Integrierte Sicherheitsschaltung nach Anspruch 5 oder 6,
**dadurch gekennzeichnet, daß**
der Kondensator (31) mit einem MOS-Schalttransistor (32) eine Reihenschaltung bildet, die zwischen die Anschlüsse für eine Versorgungsspannung (VDD, VSS) geschaltet ist, daß die Gate-Elektrode des Schalttransistors (32) von einem die Initialisierung angebenden Signal (A) steuerbar ist, daß der Substratanschluß des MOS-Schalttransistors (32b) über einen weiteren MOS-Schalttransistor (34) mit einem der Versorgungspotentialanschlüsse verbindbar ist.

8. Integrierte Sicherheitsschaltung nach Anspruch 6,
**gekennzeichnet durch**
einen Komparator (36), der eingangsseitig mit dem vom Dielektrikum umgebenen Pol des Kondensators (31) und mit einem Anschluß für ein Referenzsignal (VREF) verbunden ist und der ausgangsseitig einen Anschluß für das Ablaufsignal (B) aufweist.

9. Integrierte Sicherheitsschaltung nach einem der Ansprüche 1 bis 8,
**dadurch gekennzeichnet, daß**
die Sicherheitsfunktion ein Verschlüsseln oder Entschlüsseln von Daten umfaßt.

## Claims

1. Integrated security circuit
having a function unit (1) designed to execute a security function,
having a control device (2, 3, 4) designed to determine the number of executions of the security function by the function unit (1) per unit of time, and based on this result to enable or block the continued execution of the security function by the function unit (1), the control device (2, 3, 4) having a counting device (2) coupled to the function unit (1) for counting each execution of the security function in the function unit (1) after an initialization,
**characterized by**
a capacitor (31), in dependence on whose charge state an expiry signal (B) can be generated indicating that a defined maximum time period has expired, and a switching means (4, 32) for recharging the capacitor (32) and initializing the counting device (2) when the expiry signal (B) is present.

2. Integrated security circuit according to Claim 1,
**characterized by**
a means for defining a threshold value, the execution of the security function being blocked by the function unit (1) when the counting device (2) exceeds the threshold value, and otherwise being enabled.

3. Integrated security circuit according to Claim 2,
**characterized in that**
contacts for a supply voltage (VDD, VSS) are provided, that the contacts are connected to the function unit (1) and the control device (2, 3, 4), and the function unit (1) is designed to execute the security function when the supply voltage (VDD, VSS) is present, and that the capacitor (31) is designed to measure the elapsing time both when the supply voltage (VDD, VSS) is present and when the supply voltage (VDD, VSS) is subsequently not present.

4. Integrated security circuit according to one of Claims 1 to 3,
**characterized in that**
the counting device (2) is a digital incremental counter or a decremental counter that is incremented or decremented respectively whenever the security function is called, that at initialization the counter is preset to zero or to the defined threshold value, and that, when the threshold value or zero respectively is exceeded, a signal (C) is generated in order to enable or block the continued execution of the security function by the function unit (1).

5. Integrated security circuit according to one of Claims 1 to 4,
**characterized in that**
the capacitor (31) can only be discharged via a leakage-current loss.

6. Integrated security circuit according to Claim 5,
**characterized in that**
the capacitor (31) has two poles and an interlying dielectric, and that one of the poles is enclosed by the dielectric.

7. Integrated security circuit according to Claim 5 or 6,
**characterized in that**
the capacitor (31) and a MOS switching transistor (32) form a series circuit connected between the contacts for a supply voltage (VDD, VSS), that the gate electrode of the switching transistor (32) can be controlled by a signal (A) specifying the initialization, and that the substrate contact of the MOS switching transistor (32b) can be connected to one of the supply-potential contacts via an additional MOS switching transistor (34).

8. Integrated security circuit according to Claim 6,
**characterized by**
a comparator (36) that is connected on the input side to the pole of the capacitor (31) enclosed by the dielectric and to a contact for a reference signal (VREF), and that has a contact on its output side for the expiry signal (B).

9. Integrated security circuit according to one of Claims 1 to 8,
**characterized in that**
the security function comprises an encoding or decoding of data.

## Revendications

1. Circuit de sécurité intégré
comportant une unité fonctionnelle (1) qui est conçue pour exécuter une fonction de sécurité,
un dispositif de commande (2, 3, 4) qui est conçu pour déterminer le nombre des exécutions de la fonction de sécurité par l'unité fonctionnelle (1) par unité de temps et pour autoriser ou bloquer en fonction de ce nombre la suite de l'exécution de la fonction de sécurité par l'unité fonctionnelle (1), le dispositif de commande (2, 3, 4) comportant un dispositif de comptage (2) qui est couplé à l'unité fonctionnelle (1) pour compter après une initialisation chaque exécution de la fonction de sécurité dans l'unité fonctionnelle (1),
**caractérisé par** un condensateur (31) en fonction de l'état de charge duquel peut être produit un signal d'expiration (B) qui indique qu'un temps maximal prédéterminé est écoulé et par un moyen de commutation (4, 32) pour recharger le condensateur (31) et initialiser le dispositif de comptage (2) en présence du signal d'expiration (B).

2. Circuit de sécurité intégré selon la revendication 1,
**caractérisé par** un moyen pour prescrire une valeur de seuil, l'exécution de la fonction de sécurité étant bloquée par l'unité fonctionnelle (1) lorsque le dispositif de comptage (2) dépasse la valeur de seuil, et étant autorisée sinon.

3. Circuit de sécurité intégré selon la revendication 2,
**caractérisé par le fait que** des bornes sont prévues pour une tension d'alimentation (VDD, VSS), que les bornes sont reliées à l'unité fonctionnelle (1) et au dispositif de commande (2, 3, 4), que l'unité fonctionnelle (1) est conçue pour exécuter la fonction de sécurité lorsque la tension d'alimentation (VDD, VSS) est appliquée et que le condensateur (31) est conçu pour mesurer le temps qui passe, aussi bien lorsque la tension d'alimentation (VDD, VSS) est appliquée, que ensuite lorsque la tension d'alimentation (VDD, VSS) n'est pas appliquée.

4. Circuit de sécurité intégré selon l'une des revendications 1 à 3,
**caractérisé par le fait que** le dispositif de comptage (2) est un compteur numérique incrémenteur ou un compteur décrémenteur qui incrémente ou décrémente à chaque appel de la fonction de sécurité, que lors de l'initialisation le compteur est mis à zéro ou à la valeur de seuil prédéterminée et que lors d'un dépassement de la valeur de seuil ou du zéro un signal (C) est produit pour bloquer ou autoriser la suite de l'exécution de la fonction de sécurité par l'unité fonctionnelle (1).

5. Circuit de sécurité intégré selon l'une des revendications 1 à 4,
**caractérisé par le fait que** le condensateur (31) ne peut être déchargé que par l'intermédiaire d'une perte par courant de fuite.

6. Circuit de sécurité intégré selon la revendication 5,
**caractérisé par le fait que** le condensateur (31) comporte deux pôles et un diélectrique entre ces deux pôles et que l'un des pôles est entouré par le diélectrique.

7. Circuit de sécurité intégré selon la revendication 5 ou 6,
**caractérisé par le fait que** le condensateur (31) forme avec un transistor de commutation MOS (32) un circuit série, qui est branché entre les bornes destinées à une tension d'alimentation (VDD, VSS), que l'électrode de grille du transistor de commutation (32) peut être commandée par un signal (A) indiquant l'initialisation et que la borne de substrat du transistor MOS (32b) peut être reliée à l'une des bornes de potentiels d'alimentation par l'intermédiaire d'un autre transistor de commutation MOS (34).

8. Circuit de sécurité intégré selon la revendication 6,
**caractérisé par** un comparateur (36) qui est relié en entrée au pôle, entouré par le diélectrique, du condensateur (31) et à une borne destinée à un signal de référence (VREF) et qui comporte en sortie une borne destinée au signal d'expiration (B).

9. Circuit de sécurité intégré selon l'une des revendications 1 à 8,
**caractérisé par le fait que** la fonction de sécurité comprend un cryptage ou un décryptage de données.
